# EUROPÄISCHE PATENTSCHRIFT

(11) **EP 1 465 464 B1**
(45) Veröffentlichungstag und Bekanntmachung des Hinweises auf die Patenterteilung: **22.08.2007**
(21) Anmeldenummer: 04007752.1
(22) Anmeldetag: 31.03.2004
(51) Int. Cl.: H05B 41/39, H05B 39/08

(54) **Dimmermodul**
Dimmer module
Module gradateur

(30) Priorität: 05.04.2003 DE 10315554
(43) Veröffentlichungstag der Anmeldung: 06.10.2004
(73) Patentinhaber: Theben AG, 72401 Haigerloch (DE)
(72) Erfinder: Schroth, Hagen, 72074 Tübingen (DE)
(74) Vertreter: Neymeyer, Franz

(56) Entgegenhaltungen:
- EP-A- 0 901 313
- DE-A1- 3 918 809
- DE-A1- 10 025 368
- PATENT ABSTRACTS OF JAPAN Bd. 018, Nr. 527 (E-1613), 5. Oktober 1994 (1994-10-05) & JP 06 188077 A (MATSUSHITA ELECTRIC WORKS LTD), 8. Juli 1994 (1994-07-08)

## Beschreibung

Die Erfindung betrifft ein Dimmermodul bestehend aus einer programmierbaren, einen Mikroprozessor aufweisenden Steuereinrichtung, durch welche ein Leistungsteil zur Steuerung von elektrischen Verbrauchern nach dem Phasenan-/abschnitt-Prinzip ansteuerbar ist, wobei das Dimmermodul mit seinem Leistungsteil ausgangsseitig mit den Ausgängen des Leistungsteils eines nach dem Phasenan-/abschnitt-Prinzip arbeitenden Masterdimmers parallel schaltbar ist.

Dimmermodule der gattungsgemäßen Art sind beispielsweise aus der DE 197 38 857 A1 bekannt. In dieser Druckschrift ist ein Dimmersystem beschrieben, welches zur Steuerung von Beleuchtungseinrichtungen dient. Solche Dimmermodule werden zur Steuerung von unterschiedlichen Leistungen in verschiedenen Leistungsklassen angeboten. Dabei besteht der Bedarf, durch Parallelschalten solcher Dimmermodule das angebotene Leistungsspektrum zu variieren. Dies bedeutet, daß man einzelne Dimmermodule zur Steuerung eines Stromkreises miteinander kombiniert, um den Leistungsdurchsatz erhöhen zu können. Dies hat den Vorteil, daß man nicht für jede Leistungsklasse ein speziell für diese Leistungsklasse ausgelegtes Dimmermodul benötigt.

Aus der angegebenen DE 197 38 857 A1 ist ein Dimmersystem mit einem modularen Aufbau bekannt, bei welchem ein Masterdimmer und mindestens ein Slavedimmer zur Leistungserweiterung vorgesehen sind. Diese Dimmermodule arbeiten nach dem sogenannten Phasenan-/abschnitt-Prinzip. Dies bedeutet, daß die Leistungssteuerung des Verbrauchers durch eine zeitlich begrenzte Durchschaltung der beiden Halbwellen über ein Leistungsteil des Dimmers variiert wird. Dabei besteht der Masterdimmer aus einem Leistungsteil sowie einer Steuereinrichtung mit einem Mikroprozessor und arbeitet nach dem sogenannten Universaldimmerprinzip. Dieses Universaldimmerprinzip zeichnet sich dadurch aus, wie aus der DE 197 38 857 A1 hervorgeht, daß die Steuereinrichtung selbsttätig einen Lasttest durchführt, bei welchem die Art der angeschlossenen Last ermittelt wird. Weiter wird ausgeführt, daß für den Fall, daß beim Lasttest anhand von Überspannungen oder Überströmen eine induktive Last erkannt wird, ein sogenannter Phasenanschnitt eingestellt wird. Wird keine induktive Last erkannt, so wird Phasenabschnitt eingestellt, was beispielsweise zur Speisung von elektronischen Trafos oder Glühlampen erforderlich ist.

Bei diesem bekannten Dimmersystem sind die gesteuerten Leistungsausgänge der Leistungsteile aller Dimmer elektrisch parallel geschaltet und bilden somit einen gemeinsam gesteuerten Ausgang, an dem eine entsprechende Last anschließbar ist. Dabei weist nur der Masterdimmer die Steuereinrichtung mit dem Mikroprozessor auf, über welchen die Ansteuersignale für alle Leistungsteile erzeugt werden. Der Masterdimmer bzw. dessen Steuereinrichtung legt dabei den Schaltzustand, den Helligkeitswert und den Phasenwinkel fest und bildet auf dieser Grundlage entsprechende Ansteuersignale. Unter Phasenwinkel ist die zeitliche Ansteuerung der "Durchschaltung" der beiden Halbwellen der anliegenden Netzspannung zu verstehen. Diese Ansteuersignale werden über separate Steuerleitungen vom Masterdimmer zu allen weiteren Slavedimmern übertragen. Die Festlegung des Ansteuersignals erfolgt auf Grund eines über einen Dateneingang oder einen Tasteneingang des Masterdimmers eingebbaren Helligkeitssollwertes und durch eine Synchronisation mit dem Nulldurchgang der Netzwechselspannung, die über entsprechende Netzanschlüsse N, L zugeführt wird. weiter kann auch ein zusätzliches Steuermodul vorgesehen sein, über welches der Masterdimmer bzw. dessen Steuereinrichtung mit einem Bussystem koppelbar ist, aus welchem die Steuereinrichtung die einzustellenden Sollwerte bezieht.

Dies bedeutet, daß dieses Dimmersystem einerseits Anschlußleitungen für die Last benötigt und andererseits aber auch zumindest eine Signalleitung vorhanden sein muß, um die Leistungsteile sämtlicher Dimmermodule dieses Dimmersystems gleichzeitig ansteuern zu können. Durch diese gleichzeitige Ansteuerung dimmen alle Dimmermodule gleichzeitig die Leistung für die Last, wobei durch die Aufteilung der Last auf verschiedene Dimmermodule eine Überlastung der einzelnen Dimmermodul verhindert wird. Als Leistungsteil kommen hier beispielsweise Leistungstransistoren zum Einsatz, wie sogenannte MOS-Feldeffekttransistoren. Bei der Verwendung solcher MOS-Feldeffekttransistoren ergibt sich praktisch eine gleiche Lastaufteilung auf die elektrisch parallel geschalteten Leistungsteile durch die Durchlaßwiderstände der Leistungstransistoren. Dabei führt der Transistor mit dem geringsten Widerstand den höchsten Strom. Durch diesen Stromfluß erwärmt sich der Transistor, so daß sein Widerstand ansteigt. Dies hat wiederum zur Folge, daß automatisch ein Teil des Stromes auf die anderen Transistoren der anderen Dimmermodule verlagert wird und so eine Symmetrierung auf ein thermisches Gleichgewicht erreichbar ist.

Des weiteren sind auch noch andere Dimmersysteme bekannt, bei welchem lediglich das Mastermodul extern über eine entsprechende Signalleitung angesteuert wird. Die Slavemodule ermitteln die gedimmte Spannung dieses Mastermoduls und führen diese über ihr eigenes Leistungsteil nach. Hier kann allerdings eine ausgangsseitige Parallelschaltung dieser Leistungsteile nicht erfolgen, da in diesem Fall eine Ermittlung des Schaltzustandes des Mastersmoduls nicht mehr möglich wäre. Dies bedeutet, daß hier zwar auch eine stufenweise Leistungserweiterung des Dimmersystems erfolgen kann, daß aber jeder Dimmer einen eigenen Stromkreis mit der entsprechenden Last ansteuert. Bei dieser Ausgestaltung ist eine Anpassung eines einzigen Stromkreises an eine höhere Last nicht durchführbar.

Auch aus den Druckschriften DE 100 25 368 A1, JP 51-35791 B und GB 1 092 509 sind Master-Slave-Dimmer bekannt, die nach demselben Prinzip arbeiten, wie oben beschrieben.

Weiter wird in der JP 06188077 A vorgeschlagen, zur Leistungssteigerung mehrere Dimmer parallel zu schalten. Diese parallel geschalteten Dimmer werden zum Dimmen großer Lasten zeitlich versetzt (time sharing) aktiviert. Damit wird die auftretende Verlustleistung jedes einzelnen Triacs des jeweiligen Dimmers reduziert. Die zeitlich versetzte Aktivierung (time sharing) wird dabei von einer Steuereinheit, z.B. einem Shiftregister gesteuert, wobei jeder einzelne Triac den auftretenden Laststrom für jeweils eine Halbwelle schalten können muß. Es ist hier also eine übergeordnete Steuereinheit notwendig, die allen beteiligten Triac-Kanälen jedes Dimmers den Steuerzustand bzw. die für sie zutreffende Halbwelle zuweist. Dieses Dimmersystem ist nicht flexibel einsetzbar, da hier nicht einfach einzelne Dimmer hinzugefügt oder entfernt werden können. Des weiteren sind auch hier zusätzliche Steuerleitungen notwendig, um jeden Dimmer korrekt ansteuern zu können.

Der Erfindung liegt demgemäß die Aufgabe zugrunde, ein Dimmermodul der gattungsgemäßen Art derart auszugestalten, daß einerseits eine Parallelschaltung der Leistungsteile auf einen einzigen Lastkreis durchführbar ist und andererseits lediglich das Mastermodul mit externen Steuersignalen zur Steuerung des Laststromkreises beaufschlagt werden muß.

Die Aufgabe wird erfindungsgemäß dadurch gelöst, daß das Dimmermodul einen Phasendetektor aufweist, durch welchen der zeitliche Verlauf der Master-Halbwellen der zum Verbraucher durchgeschalteten Masterphase des Masterdimmers ermittelbar und an die Steuereinrichtung übergebbar ist und, daß das Leistungsteil des Dimmermoduls durch entsprechende Ansteuerung der Steuereinrichtung auf Basis des ermittelten Phasenverlaufs der Master-Halbwellen zeitlich definiert verkürzte Dimmer-Halbwellen der Dimmerphase generiert, welche parallel zur Masterphase zum Verbraucher durchgeschaltet werden.

Durch die erfindungsgemäße Ausgestaltung des Dimmermoduls kann dieses in einfacher Weise mit seinem Leistungsteil ausgangsseitig parallel zu den Ausgängen des Leistungsteils eines Masterdimmers geschaltet werden. Steuerleitungen zur Nachführung des Schaltzustandes des Dimmermoduls an den Schaltzustand des Masterdimmers sind nicht notwendig, da das Dimmermodul stets in der Lage ist, die zeitliche Ansteuerung der Master-Halbwellen zu ermitteln und entsprechend seinen eigenen Schaltzustand dieser nachzuführen.

Dazu ist vorgesehen, daß die Durchschaltung der Dimmer-Halbwellen zeitlich definiert kürzer erfolgt, als die Durchschaltung der Master-Halbwelle, so daß der vorgesehene Phasendetektor stets die Zeitdauer bzw. den Phasenwinkel der durchgeschalteten Master-Halbwellen erfassen kann. Die zeitliche Verkürzung der Dimmer-Halbwelle ist dabei präzise definiert und diese zeitliche Ansteuerdifferenz zwischen der Master-Halbwelle und der Dimmer-Halbwelle wird stets konstant gehalten. Verkürzt sich nun die Durchschaltzeit bzw. der Phasenwinkel der Master-Halbwellen so erhält die Steuereinrichtung des Dimmermoduls über den Phasendetektor eine Information, daß die definierte Zeitdifferenz kürzer als der vorgegebene Sollwert ist. Dementsprechend regelt das Dimmermodul seine eigenen Dimmer-Halbwellen auf einen kürzeren Zeitraum, bis die vorgegebene Zeitdifferenz wieder erreicht ist. Dies hat zur Folge, daß das Dimmermodul nicht über eine separate Steuerleitung angesteuert werden muß, sondern die Informationen bezüglich seines einzunehmenden Schaltzustandes direkt aus dem Schaltzustand bzw. aus dem zeitlichen Verlauf der Master-Halbwellen ermittelt und seinen eigenen Schaltzustand entsprechend diesem zeitlichen Verlauf mit der entsprechend vorgegebenen Zeitdifferenz nachführt.

Diese elektronische Ausgestaltung erlaubt es auch, mehrere identische Dimmermodule ausgangseitig in Parallelschaltung mit einem Masterdimmer zu koppeln. Da alle Dimmermodule identisch programmiert sind und somit auch ihren eigenen Schaltzustand der gleichen Zeitdifferenz bezüglich des Durchschaltens der Master-Halbwellen anpassen, können alle parallel geschalteten Dimmermodule ihre Schaltzustände gleichzeitig dem Schaltzustand des Masterdimmers nachführen.

Hätten die Dimmermodule den gleichen Durchgangswiderstand wie der Masterdimmer, so würden diese eine minimal geringere Leistung durchschalten. Dies kann dadurch angepaßt werden, indem die Durchgangswiderstände der Dimmermodule um einen entsprechenden Prozentsatz kleiner gewählt werden als der Durchgangswiderstand des Masterdimmers, so daß insgesamt die gleiche oder auch eine größere Leistung von den zusätzlichen Dimmermodulen schaltbar ist.

Gemäß Anspruch 2 kann desweiteren vorgesehen sein, daß als Zeitbasis zur Detektion des zeitlichen Verlaufs der Masterphase und zur Steuerung des zeitlichen Verlaufs der Dimmer-Halbwellen ein elektronischer Taktgeber vorgesehen ist. Solche Taktgeber sind in der Regel bei einem, wie oben erwähnt, Universaldimmer ohnehin vorhanden, so daß dieser Taktgeber durch entsprechende Programmierung des Mikroprozessors bzw. der Steuereinrichtung in einfacher Weise für die zeitliche Ansteuerung der Dimmer-Halbwellen in Abhängigkeit des ermittelten Phasenverlaufs der Master-Halbwellen herangezogen werden kann.

Gemäß Anspruch 3 kann der Phasendetektor aus zwei Halbwellendetektoren bestehen, durch welche jede der Halbwellen der Masterphase separat detektierbar und von der Steuereinrichtung auswertbar ist. Durch diese Ausgestaltung sind unterschiedliche Schaltzustände des Masterdimmers erkennbar und durch die Steuereinrichtung nachführbar. So kann beispielsweise bei thermischer Überlastung des Masterdimmers dieser zur Leistungsreduzierung beispielsweise seine negative Halbwelle "abschalten", was wiederum durch den zweiten Halbwellendetektor des Dimmermoduls erkannt wird. Das Dimmermodul ist dabei so programmiert, daß anhand der Detektion der ersten, positiven Halbwelle der Masterphase, das Dimmermodul seine zweite Halbwelle identisch zur ersten Halbwelle durchgeschaltet. Damit übernimmt das Dimmermodul einen größeren Anteil der Last, so daß der Masterdimmer entlastet wird.

Desweiteren kann gemäß Anspruch 4 vorgesehen sein, daß die Steuereinrichtung jede Dimmer-Halbwelle der Dimmerphase separat ansteuert. Durch diese Ausgestaltung ist das Dimmermodul in der Lage, insbesondere bei thermischer Überlastung, eine seiner Halbwellen "abzuschalten", so daß der Leistungsdurchsatz durch das Dimmermodul entsprechend verringert wird und dementsprechend eine Abkühlung erfolgen kann.

Um den Schaltzustand des Dimmermoduls schneller dem Schaltzustand des Masterdimmers nachführen zu können, kann gemäß Anspruch 5 vorgesehen sein, daß die Steuereinrichtung in zyklischen oder unzyklischen Zeitabständen einzelne oder mehrere aufeinander folgende Dimmer-Halbwellen nicht oder überdurchschnittlich verkürzt durchschaltet. Aufgrund dieser Ausgestaltung ist das Dimmermodul in der Lage, eine schlagartig eintretende, größere Verringerung des Leistungsdurchsatzes und damit eine kürzere Ansteuerung der betreffenden Master-Halbwellen des Masterdimmers zu erkennen, so daß diese auch entsprechend rasch nachgeführt werden kann.

Gemäß Anspruch 6 kann vorgesehen sein, daß die Steuereinrichtung einen Teil des Beginns jeder Halbwelle der am Verbraucher und am zum Verbraucher in Reihe geschalteten Dimmermodul anliegenden Netzspannung nicht als Dimmspannung durchschaltet und dieser Teil zur Energieversorgung des Dimmermoduls herangezogen wird. Durch diese Ausgestaltung ist keine separate Energieversorgung, wie dies bei herkömmlichen Dimmermodulen in der Regel der Fall ist, des Dimmermoduls notwendig, um das gesamte Dimmermodul mit der benötigten Betriebsspannung zu versorgen. Dabei wird z.B. der Beginn der aufsteigenden Flanke jeder der beiden Halbwellen der Dimmer-Halbwelle nicht durchgeschaltet, so daß dieser Anteil für die Energieversorgung des Dimmermoduls selbst zur Verführung steht. Da der Beginn jeder Halbwelle beispielsweise bis zum Erreichen einer Spannung von etwa 30 Volt nur einen geringen Prozentsatz an der Gesamtleistung der gesamten Halbwelle ausmacht, ist diese Leistungsabzweigung für die Stromversorgung des Dimmermoduls für die Leistungsdurchschaltung zum Verbraucher unerheblich, so daß trotz dieser Leistungsabzweigung die gewünschte volle Leistung abzüglich etwa 1% zum Verbraucher durchschaltbar ist. Auch durch diese Ausgestaltung wird der Verdrahtungsaufwand der Dimmermodule erheblich reduziert. Durch diese spezielle Ausgestaltung sind lediglich zwei Anschlußleitungen, welche gleichzeitig den Laststromkreis darstellen notwendig, um das erfindungsgemäße Dimmermodul betreiben zu können. Diese Ausgestaltung funktioniert jedoch nur, wenn sämtliche, parallelgeschaltete Dimmermodule also auch der Masterdimmer nach diesem Prinzip arbeiten.

Um das erfindungsgemäße Dimmermodul auch als Masterdimmer einsetzen zu können, kann gemäß Anspruch 7 vorgesehen sein, daß dieses mit einem zusätzlichen Interface versehen ist, über welches der Steuereinrichtung des Dimmermoduls entsprechende Steuersignale zur Ansteuerung des Leistungsteils zuführbar sind. Dabei kann die Steuereinrichtung derart programmiert sein, daß beim ersten Einschalten des Dimmermoduls zunächst geprüft wird, ob am Interface ein entsprechendes Steuersignals anliegt. Ist dies der Fall, so wird anhand dieses Steuersignals der entsprechende Schaltzustand des Dimmermoduls eingestellt. Ist ein solches Steuersignal nicht vorhanden und gleichzeitig aber eine gedimmte Spannung ausgangsseitig über den Phasendetektor feststellbar, so "weiß" die Steuereinrichtung, daß es nicht als Masterdimmer sondern als Slavedimmer fungiert und führt entsprechend des detektierten Schaltzustandes seinen eigenen Schaltzustand der detektierten Masterphase wie oben beschrieben nach.

Gemäß Anspruch 8 kann das Dimmermodul auch mit einer Temperaturmeßeinrichtung versehen sein, welche an die Steuereinrichtung bei Erreichen einer vorgebbaren Höchsttemperatur des Dimmermoduls ein Temperatursignal abgibt. Bei anliegendem Temperatursignal reduziert dabei die Steuereinrichtung die durchgeschaltete Leistung des Dimmermoduls, so daß dieses wieder abkühlt. Durch diese Ausgestaltung ist eine Überlastung des Dimmermoduls sicher ausgeschlossen.

In Zusammenhang mit dieser Steuerung kann diese Leistungsreduzierung bei anliegendem Temperatursignal gemäß Anspruch 9 derart erfolgen, daß zur Leistungsreduzierung nur eine der beiden Dimmer-Halbwellen durchgeschaltet wird.

Weiter kann vorgesehen sein, daß gemäß Anspruch 10 das als Masterdimmer eingesetzte Dimmermodul zeitweilig nur eine der beiden Master-Halbwellen durchschaltet und durch den Phasendetektor der Schaltzustand eines parallel geschalteten, weiteren Dimmermoduls ermittelbar ist.

Durch diese Ausgestaltung ist das als Masterdimmer eingesetzte Dimmermodul in der Lage auch die parallel geschalteten Dimmermodule, welche dann als Slavedimmer fungieren, bezüglich deren Schaltzustand zu überwachen. Insbesondere sind Leistungsreduzierungen eines Slavedimmers durch den Masterdimmer erkennbar, für den Fall, daß einer der parallel geschalteten Slavedimmer bei thermischer Überlastung seine Leistung reduziert. Stellt der Masterdimmer fest, daß beispielsweise keiner der parallel geschalteten Slavedimmer die zweite Dimmer-Halbwelle durchschaltet, so ist davon auszugehen, daß alle Slavedimmer thermisch überlastet sind. Da gleichzeitig dann der Masterdimmer eine erhöhte Leistung übernehmen muß, würde dies wiederum auch zu einer Übertemperatur des Masterdimmers führen. Muß dann aufgrund diese Übertemperatur auch der Masterdimmer seine Leistung reduzieren, so daß die im Lastkreis geforderte Leistung nicht mehr zur Verführung steht, so kann die Steuereinrichtung über das Interface des Masterdimmers eine Übertemperaturmeldung an ein übergeordnetes Überwachungsystem abgeben.

Es ist erkennbar, daß mit dem erfindungsgemäßen Dimmermodul ein äußerst variables und sicheres, stufenweise erweiterbares Dimmersystem aufbaubar ist, wobei lediglich der Lastkreis mit seinen beiden Anschlußleitungen für die Verdrahtung notwendig ist, sofern eine Ausgestaltung des Dimmermoduls gemäß Anspruch 6 vorgesehen ist. Ist diese Ausgestaltung gemäß Anspruch 6 nicht vorgesehen, so müssen die Dimmermodule über eine separate Energieversorgung mit einem entsprechenden Netzteil verfügen, das jedoch seine Energie ebenfalls von der Netzspannung bezieht. Diese Netzspannung ist dann allerdings nicht die gedimmte Spannung.

Besonders vorteilhaft ist auch, daß ein über einen Masterdimmer dimmbarer Lastkreis mit beliebig vielen zusätzlichen Verbrauchern erweiterbar ist. Wenn beispielsweise eine ursprünglich vorgesehene Beleuchtungseinrichtung, welche über einen Masterdimmer mit geringer Leistung angesteuert ist, mit einer zusätzlichen Beleuchtungseinrichtung erweitert werden soll, so kann der Slavedimmer beispielsweise zusammen mit der zusätzlichen Beleuchtungseinrichtung im Bereich des Installationsortes oder in der Beleuchtungseinrichtung integriert angeordnet werden, ohne daß noch sonstige Steuerleitungen oder versorgungsleitungen für den Slavedimmer notwendig sind.

Anhand der Zeichnung wird nachfolgend ein Ausführungsbeispiel der Erfindung näher erläutert. Es zeigt :
- Fig. 1: ein Blockschaltbild eines erfindungsgemäßen Dimmermoduls, welches als Masterdimmer einsetzbar ist ;
- Fig. 2: ein Blockschaltbild zweier erfindungsgemäßer Dimmermodule, von welchen das eine den Masterdimmer aus Fig. 1 und das andere ein als Slavedimmer ausgebildetes Dimmermodul darstellt;
- Fig. 3 a) bis f): den Phasenverlauf sowie die zugehörigen Eingangs- und Ansteuerpegel bei Phasenabschnittsteuerung ;
- Fig. 4 a) bis f): den Phasenverlauf und die Eingangs- und Ansteuerpegel bei Phasenanschnittsteuerung.

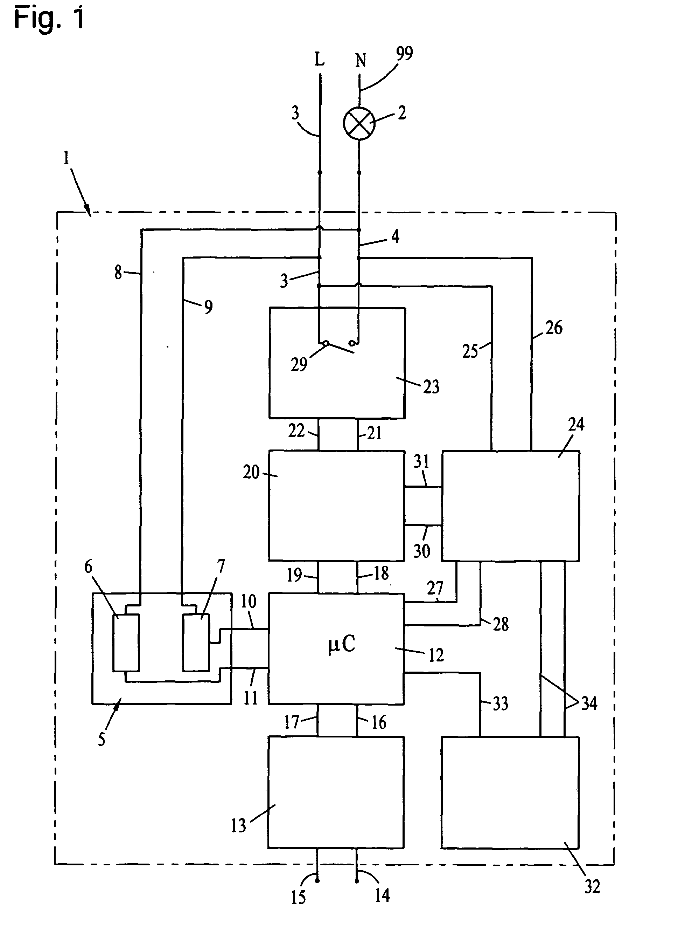

Fig. 1 zeigt das Blockschaltbild eines erfindungsgemäßen Dimmermoduls 1, welches sowohl als Masterdimmer als auch als Slavedimmer einsetzbar ist. Das als Einzeldimmer hier beispielhaft als Masterdimmer 1 eingesetzte Dimmermodul dient zu Ansteuerung eines Verbrauchers 2, welcher über die beiden Netzleitungen 3 und 99 am öffentlichen Netz L und N angeschlossen ist.

Wie weiter aus Fig. 1 erkennbar ist, weist der Masterdimmer 1 einen Phasendetektor 5 auf, welcher wiederum mit zwei Halbwellendetektoren 6 und 7 versehen ist. Der Halbwellendetektor 6 ist dabei über die Verbindungsleitung 8 mit der Netzleitung 99 über den Verbraucher 2 und somit mit dem sogenannten Nullleiter für die negative Halbwelle verbunden. Der Halbwellendetektor 7 ist seinerseits wiederum über die Verbindungsleitung 9 mit der Netzleitung 3 verbunden, welche die Phase der Netzversorgung führt.

Weiter führen vom Phasendetektor 5 bzw. von seinen Halbwellendetektoren 6 und 7 zwei Signalleitungen 10 und 11 zu einem programmierbaren Mikroprozessor 12, welcher die über die Signalleitungen 10 und 11 zugeführten Steuersignale auswertet.

Weiter ist beim vorliegenden Ausführungsbeispiel dieses Masterdimmers 1 ein Interface 13 vorgesehen, welchem von außen über zwei Steuerleitungen 14 und 15 entsprechende Ansteuersignale zuführbar sind. Das Interface 13 überträgt diese Steuersignale über die beiden Signalleitungen 16 und 17 an den Mikroprozessor 12. Liegt nun an den beiden Steuerleitungen 14 und 15 ein entsprechendes Ansteuersignal zur Steuerung des Verbrauchers 2 bzw. zur Steuerung des Masterdimmers 1 an, so wird vom Mikroprozessor 12 eine zeitliche Steuerung für eine Phasenabschnitt- oder Phasenanschnittsteuerung des Verbrauchers 2 berechnet. Diese zeitliche Ansteuerung durch entsprechende Festlegung des sogenannten Phasenwinkels wird über die beiden Steuerleitungen 18 und 19 an eine Treiberschaltung 20 übergeben, durch welche wiederum über zwei Steuerleitungen 21 und 22 ein Leistungsteil 23 angesteuert wird. Im Ursprungszustand, d.h. beim Einschalten des Masterdimmers 1 wird durch das Leistungteil 23 keine Spannung durchgeschaltet, was in Fig. 1 symbolisch durch den offenen Schalter 29 dargestellt ist. Dies bedeutet, daß bei anliegender Netzspannung an den Netzleitungen 3 und 99 am Masterdimmer 1 die gesamte Netzspannung abfällt und vom Phasendetektor 5 bzw. von seinen beiden Halbwellendetektoren 6 und 7 detektierbar ist.

Weiter weist der Masterdimmer 1 ein Netzteil 24 auf, welches seine Energie direkt von den Netzleitungen 3 und 4 über die beiden Spannungsversorgungsleitungen 25 und 26 bezieht. Das Netzteil 24 versorgt einerseits über die Versorgungsleitungen 27 und 28 den Mikroprozessor 12 und andererseits über die Versorgungsleitung 30 und 31 die Treiberschaltung 20. Dabei ist vorgesehen, daß das Netzteil 24 beispielsweise nach dem Phasenabschnittprinzip oder auch dem Phasenanschnittprinzip einen Teil der Halbwellen der anliegenden Netzspannung zur eigenen Spannungsversorgung verwendet. D.h., daß beispielsweise beim Phasenabschnittprinzip die ansteigende Halbwelle zur Stromversorgung vom Netzteil für einen kurzen Zeitraum "durchgeschaltet" wird, bis beispielsweise die ansteigende Halbwelle ca. 30 V erreicht hat. Damit benötigt das Netzteil keine separate Spannungsversorgung, sondern es bezieht seine Betriebsenergie direkt aus den Netzleitungen 3 und 4 des Verbrauchers 2.

Weiter ist der Masterdimmer 1 mit einer Temperaturerfassungseinrichtung 32 versehen, welche beispielsweise als Termistorschaltung ausgebildet sein kann. Bei Erreichen einer bestimmten Grenztemperatur wird von dieser Termistorschaltung über die Signalleitung 33 ein entsprechendes Signal an den Mikroprozessor 12 übermittelt, so daß dieser den Leistungsdurchsatz durch den Masterdimmer 1 entsprechend verringert. Dies kann beispielsweise dadurch geschehen, daß die negative Halbwelle der Netzspannung für den Verbraucher 2 nicht durchgeschaltet wird. Dadurch wird der Stromfluß durch den Masterdimmer verringert, so daß dieser abkühlen kann. Die Energieversorgung der Termistorschaltung kann ebenfalls durch das Netzteil 24 über die Versorgungsleitungen 34 erfolgen.

Der Masterdimmer 1 in der in Fig. 1 dargestellten erfindungsgemäßen Art kann sowohl als Masterdimmer wie auch als Slavedimmer, wie bereits oben erwähnt, eingesetzt werden.

Durch den vorgesehenen Phasendetektor 5 sowie das Interface 13 ist der Mikroprozessor 12 in der Lage, zu prüfen, ob eine Veränderung der Spannung an den Netzleitungen 3 und 4 vorliegt oder ob an den Steuerleitungen 14 und 15 ein Ansteuersignal anliegt. Stellt der Masterdimmer 1 nach dem Einschalten keinerlei Veränderung des Spannungsverlaufs über den Phasendetektor 5 in den Netzleitungen 3 und 4 fest, so findet keinerlei Reaktion über den Mikroprozessor statt. Solange keine Änderung der Spannungszustände in den Netzleitungen 3 und 4 vorliegt und aber ein Steuersignal über die beiden Steuerleitungen 14 und 15 übermittelt wird, so "weiß" der Masterdimmer 1, daß er als Masterdimmer fungiert. Entsprechend der Steuersignale wird über den Mikroprozessor 12, die Treiberschaltung 20 und das Leistungsteil 23 eine entsprechende Phasenabschnitt-/ Phasenanschnittsteuerung des Verbrauchers 2 geschaltet.

Liegt jedoch am Interface 13 keinerlei Steuersignal an und ändert sich der Spannungszustand in den Netzleitungen 3 und 4, so wird dieses von Phasendetektor 5 detektiert, welcher entsprechende Steuersignal an den Mikroprozessor 12 abgibt. Nun "weiß" der Mikroprozessor 12 bzw. der Masterdimmer 1, daß ein als Masterdimmer fungierender weiterer Dimmer vorhanden ist, der die Dimmspannung durchgeschaltet hat. Dieser Masterdimmer schaltet nach dem Phasenabschnitt-/anschnittprinzip zeitweilig die beiden Halbwellen der Netzversorgung durch, so daß am Masterdimmer 1 in diesen Zeiträumen keine Spannung mehr abfällt. Dies wird nun vom Phasendetektor 5 detektiert, so daß ein eindeutiges, zeitliches Signal für den Mikroprozessor 12 vorliegt. Nun führt der Mikroprozessor 12 bei entsprechender Programmierung in der Betriebsart "Slave" seinen eigenen Schaltzustand dem Schaltzustand des über die Netzleitungen 3 und 4 festgestellten Schaltzustandes des vorhandenen Masterdimmers nach. Dabei wird allerdings zeitlich sowohl die Oberhalbwelle als auch die Unterhalbwelle kürzer durchgeschaltet, so daß der Phasendetektor 5 nach Beendigung der Durchschaltung seiner eigenen Halbwellen stets noch erkennen kann, ob der vorhandene Masterdimmer noch denselben Schaltzustand aufweist. Verkürzt sich die zeitliche Ansteuerung der Masterphase des vorhandenen Masterdimmers, so stellt der Mikroprozessor 12 fest, daß die Zeitspanne zwischen der eigenen Phase und der Masterphase kleiner wird oder auch gar nicht mehr vorhanden ist und nimmt somit seine zeitliche Ansteuerung der eigenen Halbwellen zurück.

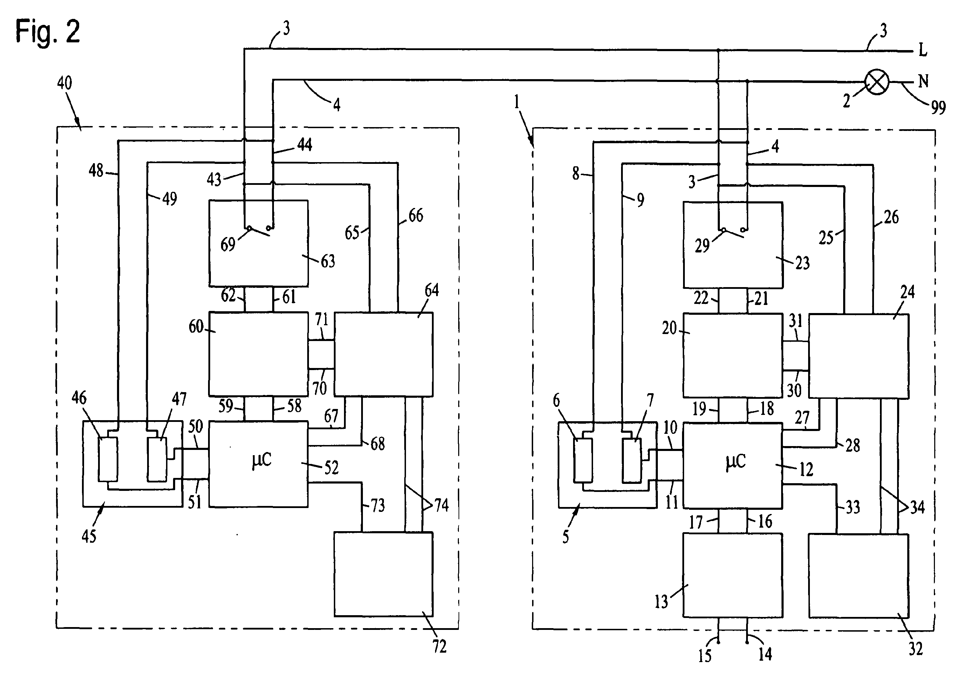

Fig. 2 zeigt ein Blockschaltbild, bei welchem der Masterdimmer 1 aus Fig. 1 als Masterdimmer 1 eingesetzt ist und zu diesem ein zweites Dimmermodul 40 ausgangsseitig parallel geschaltet ist.

Es ist erkennbar, daß dieses zweite Dimmermodul, welches hier als Slavedimmer 40 fungiert, bis auf das Interface 13 des Masterdimmers 1 identisch aufgebaut ist wie der Masterdimmer 1. So weist auch der Slavedimmer 40 Anschlußleitungen 43 und 44 auf, welche mit den Netzleitungen 3 und 4 des Verbrauchers 2 in Parallelschaltung zu den Anschlußleitungen 3 und 4 des Masterdimmers 1 verbunden sind. Weiter ist ebenfalls ein Phasendetektor 45 bestehend aus einem ersten Halbwellendetektor 46 und einem zweiten Halbwellendetektor 47 vorgesehen. Die beiden Halbwellendetektoren 46 und 47 stehen über die beiden Verbindungsleitungen 48 und 49 mit den beiden Netzanschlußleitungen 43 und 44 in Verbindung. Weiter führen von den Halbwellendetektoren 46 und 47 zwei Signalleitungen 50 und 51 zum Mikroprozessor 52. Der Mikroprozessor 52 steht über die beiden Steuerleitungen 58 und 59 mit der Treiberschaltung 60 in Verbindung, welche wiederum über die beiden Steuerleitungen 61 und 62 das Leistungsteil 63 ansteuert, dessen geöffneter Zustand symbolisch über den Schalter 69 dargestellt ist.

Des weiteren ist ebenfalls ein Netzteil 64 vorgesehen, welches über entsprechende Versorgungsleitungen 67 und 68 bzw. 70 und 71 den Mikroprozessor 52 bzw. die Treiberschaltung 60 mit der entsprechend benötigten Betriebsspannung versorgt. Auch weist der Slavedimmer 40 eine Temperaturerfassungsschaltung 72 auf, welche über die Signalleitung 73 mit dem Mikroprozessor 52 in Verbindung steht und über die Versorgungsleitungen 74 vom Netzteil 64 mit der erforderlichen Betriebsenergie gespeist wird.

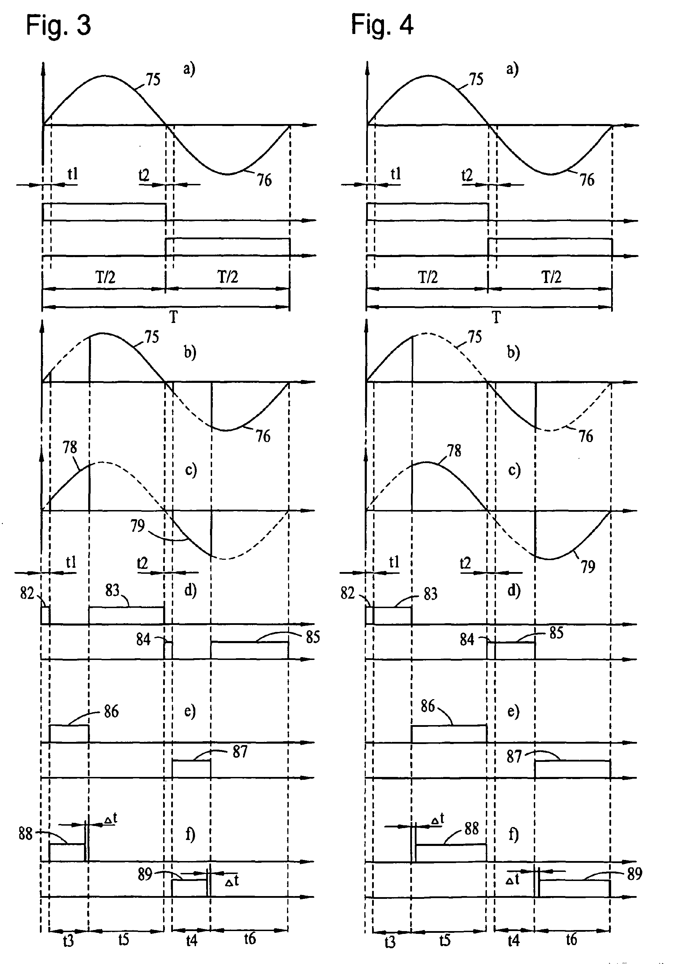

Die Funktionsweise dieser Dimmeranordnung wird anhand der Zeichnungsfigur 3 a9 bis f) einerseits für Phasenabschnitt und der Zeichnungsfigur 4 a) bis f) andererseits für Phasenanschnitt näher erläutert. In den Fig. 3 und 4 sind die Spannungsverläufe der am Masterdimmer 1 und am Slavedimmer 40 gleichzeitig über die Netzleitungen 3 und 4 anliegenden Spannungen sowie die zu dem Verbraucher durchgeschalteten Spannungsverläufe dargestellt.

In Fig. 3 zeigt in Darstellung a) der Spannungsverlauf, welcher am Master- und Slavedimmer anliegt, sofern die Spannung nicht zu dem Verbraucher 2 aus Fig. 2 durchgeschaltet ist. Es ist erkennbar, daß die obere Halbwelle 75 der Netzspannung und die untere Halbwelle 76 über den gesamten Zeitraum T an den beiden Dimmern 1 und 40 anliegt und nicht durchgeschaltet wird. Demzufolge liegt an dem Verbraucher 2 ebenfalls keine Spannung an, so daß diese bis auf einen geringen Versorgungsstrom der Dimmer vollständig ausgeschaltet ist. Die beiden Controllereingangspegel der beiden Halbwellendetektoren 6 und 7 sowie 46 und 47 sind unterhalb des sinusförmigen Verlaufs der beiden Halbwellen 75 und 76 dargestellt und erstrecken sich jeweils über den halben Gesamtzeitraum T/2, wie dies aus Fig. 3 a) erkennbar ist.

Aus diesem sinusförmigen Spannungsverlauf der beiden Halbwellen 75 und 76 wird die Spannungsversorgung für die beiden Netzteile 24 und 64 der beiden Dimmer 1 und 40 aus Fig. 2 entnommen. Dabei wird über einen kurzen Zeitraum t1 und t2 ein Teil der Halbwellen 75 und 76 zum Netzteil 24 und 64 durchgeschaltet, so daß die Energieversorgung für die beiden Dimmer 1 und 40 sichergestellt ist. Diese Anteile über den Zeitraum t1 und t2 werden auch bei Ansteuerung des Verbrauchers 2 nicht auf den Verbraucher 2 durchgeschaltet. Dies hat den großen Vorteil, daß keine separaten Spannungsversorgungsleitungen für das Netzteil 24 und 64 notwendig sind und insbesondere der Slavedimmer 40 zusammen mit einem zusätzlichen Verbraucher unabhängig vom Installationsort des Masterdimmers 1 parallel in die Netzleitungen 3 und 4 eingekoppelt werden kann.

Unter Fig. 3 b) ist der Spannungsverlauf an beiden Dimmern 1 und 40 in durchgezogenen Linien dargestellt, wenn nach dem Phasenabschnittsprinzip dem Verbraucher 2 zeitlich begrenzt Energie zugeführt wird, d.h. die Netzspannung der Halbwellen 75 und 76 über die Zeiträume t3 und t4 vom Masterdimmer 1 durchgeschaltet wird.

Dabei zeigt die Darstellung Fig. 3 c) den an dem Verbraucher 2 anliegenden Spannungsverlauf in durchgezogenen Linien, welcher aufgrund der Spannungsansteuerung gemäß der Darstellung von Fig. 3 b) vom Masterdimmer durchgeschaltet wird. Es ist erkennbar, daß während der Zeiträume t1 und t2 die beiden Halbwellen 75 und 76 nicht durchgeschaltet werden, da diese kurzen Bereiche zur Spannungsversorgung, wie bereits oben erläutert, für das Netzteil 24 bzw. 64 benötigt werden.

Nach Ablauf des Zeitraumes t1 wird über eine beispielhaft dargestellte Zeitspanne t3 die Spannung zu dem Verbraucher 2 durchgeschaltet. Dementsprechend liegt, wie aus der Darstellung c) ersichtlich ist, dieser entsprechend durchgeschaltete Spannungsanteil 78 über diesen Zeitraum t3 an dem Verbraucher 2 an. Desgleichen gilt bezüglich der Zeitspanne t2 für die untere Halbwelle 76. Während der Zeitspanne t2 wird die Netzspannung ebenfalls nicht auf den Verbraucher 2 durchgeschaltet, so daß auch dieser Anteil der unteren Halbwelle 76 für die Versorgung der Netzteile 24 und 64 zur Verfügung steht.

Anschließend wird auch die untere Halbwelle 76 über den Zeitraum t4 durchgeschaltet, so daß sich wie in der Darstellung c) erkennbar, ein Spannungsanteil 79 ergibt, welcher zu dem Verbraucher 2 durchgeschaltet wird. Während der Zeiträume t5 und t6 wird die Spannung der oberen Halbwelle 75 und der unteren Halbwelle 76 nicht durchgeschaltet, so daß auch während dieser Zeitraume t5 und t6 an dem Verbraucher 2 keine Spannung anliegt. D.h. der Masterdimmer 1 schaltet die Netzspannung der Halbwellen 75 und 76 nur zeitweise entsprechend eines am Interface 13 anliegenden Ansteuersignals durch, so daß beispielsweise ein als Beleuchtung ausgebildeter Verbraucher ein gedämpftes Licht abgibt. Bei maximaler Ansteuerung des Verbrauchers 2 sind t5 und t6 = 0.

In der Darstellung Fig. 3 d) sind die zugehörigen Controllereingangspegel 82, 83 und 84, 85 der beiden Halbwellendetektoren 6, 7 und 46, 47 des Masterdimmers 1 sowie des Slavedimmers 40 dargestellt, welche zwangsläufig identisch sind, da von diesen dieselbe vom Masterdimmer 1 durchgeschaltete Spannung detektiert wird. So erkennen die beiden Halbwellendetektoren 6 und 46 des Masterdimmers 1 und des Slavedimmers 40, daß zu Beginn der oberen Halbwellen 75 die Spannung, welche von den Netzteilen 24 und 64 benötigt wird, nicht durchgeschaltet ist. Dies ist durch den Anfangspegel 82 in der Darstellung d) über den Zeitraum t1 erkennbar. Desweiteren liegt während des Zeitraumes t3 an beiden Dimmern 1 und 40 keine Spannung an, da diese durchgeschaltet ist. Insoweit gibt es hier auch kein Pegelsignal, wie dies in der Darstellung d) erkennbar ist. Während der Sperrphase während des Zeitraumes t5 fällt wiederum an beiden Dimmern 1 und 40 die volle Spannung der oberen Halbwelle 75 ab, so daß auch hier wiederum ein entsprechender Steuerpegel 83 generiert wird.

In gleicher Weise wird auch ein entsprechender Signalpegel durch den zweiten Halbwellendetektor 7 bzw. 47 der beiden Dimmer 1 und 40 generiert. So erkennen die Halbwellendetektoren 7 und 47, daß der Beginn der unteren Halbwelle 76 zur Versorgung des jeweiligen Netzteiles 24 und 64 nicht durchgeschaltet wird, so daß der Anfangspegel 84 generiert wird. Daran anschließend wird die Spannung 79 durchgeschaltet, so daß an den beiden Dimmern 1 und 40 keine Spannung mehr anliegt und dementsprechend auch kein Eingangspegel generiert wird. Anschließend wird wiederum die untere Halbwelle 76 während des Zeitraumes t6 nicht durchgeschaltet, so daß sich hier wiederum ein Schaltpegel 85 ergibt, welcher sich über den Zeitraum t6 erstreckt.

Aufgrund dieser festgestellten Controllereingangspegel 82, 83 sowie 84 und 85 erfolgt nun die Ansteuerung des Leistungsteils 63 des Slavedimmers 40. Hierzu ist in der Darstellung e) der Ansteuerpegel des Masterdimmers 1 mit 86 und 87 gekennzeichnet. Dabei stellt 86 den Ansteuerpegel für die obere Halbwelle 75 und 87 den Ansteuerpegel für die unter Halbwelle 76 dar. Die beiden Ansteuerpegel 86 und 87 erstrecken sich identisch über den Schalzeitraum t3 und t4 über deren gesamte Längen. Diese Ansteuerung des Leistungsteils 23 erfolgt aufgrund eines Steuersignals, welches dem Masterdimmer 1 über dessen Interface 13 zugeführt wird. Dementsprechend weisen diese Ansteuerpegel 86 und 87 auch die gleiche zeitliche Länge t3 und t4 auf, welche identisch zu den beiden Durchschaltzeiträumen sind.

Demgegenüber wird vom Slavedimmer 40 innerhalb dieser Zeiträume t3 und t4 eine kürzere "Durchschaltphase" generiert. Dementsprechend sind auch beiden Ansteuerpegel 88 und 89 in der Darstellung f) kürzer dargestellt. Dabei kann sich eine gewisse Zeitverzögerung des Beginns dieser beiden Ansteuerpegel 88 und 89 des Slavedimmers 40 aus einer gewissen Zeitverzögerung aufgrund der Abhängigkeit vom Controllereingangssignal der in der Darstellung d) dargestellten Eingangspegel 83 und 85 ergeben. Diese Verzögerungszeit kann systembedingt auftreten und entspricht der Reaktionszeit der elektronischen Schaltung.

Aus den beiden Zeiträumen t3 und t4 wird ein Ansteuerpegel 88 bzw. 89 berechnet, welcher definiert um jeweils den gleichen Differenzzeitraum Δt kürzer ist als die beiden Ansteuerpegel 86 und 87 des Masterdimmers 1. Diese Zeiträume Δt sind mit einer entsprechenden Programmierung der Steuereinrichtung auf einen definierten Wert festlegbar.

Dies bedeutet nun, daß die Halbwellendetektoren 46 und 47 stets erkennen können, wie die Leistung vom Masterdimmer 1 angesteuert wird. Denn dieser weist einen längeren Steuerpegel 86 und 87 auf, während dessen Zeitraum t3 und t4 an beiden Dimmern 1 und 40 keine Spannung anliegt. Dieser kürzere Zeitraum Δt wird deshalb genutzt, um bei der Detektion erkennen zu können, ob während dieses Zeitraumes Δt tatsächlich an beiden Dimmern 1 und 40 keine Spannung anliegt. Ist das der Fall, so "weiß" die Steuereinrichtung des Slavedimmers 40, daß sie ihre eigene Ansteuerung korrekt an die Ansteuerung des Masterdimmers angepaßt hat. Verlängert sich dieser Zeitraum Δt aufgrund einer Änderung der Ansteuerung durch den Masterdimmer 1, so wird diese Information über den Phasendetektoren 45 der Steuereinrichtung 52 übergeben und die Ansteuerpegel 88 und 89 werden entsprechend nachgeführt. Verringert sich der Zeitraum Δt aufgrund den detektierten Schaltspannungen des Masterdimmers 1, so führt der Slavedimmer 40 ebenfalls den Ansteuerzeitraum oder sogenannten Phasenwinkel seiner Ansteuerpegel 88 und 89 nach, bis wieder die vorgegebene Zeitdifferenz Δt erreicht ist.

Um schnelle Dimmvorgänge des Masterdimmers 1 schneller berücksichtigen zu können, ist hier auch vorgesehen, daß der Slavedimmer 40 in zyklisch oder unzyklischen Zeitabständen seine Ansteuerpegel 88 oder 89 entweder der oberen Halbwelle oder der unteren Halbwelle für den Zeitraum einer der Halbwellen 75 oder 76 nicht oder überdurchschnittlich verkürzt durchschaltet, so daß auch größere Zeitdifferenzen bei starker Verkürzung entweder des Zeitraumes t3 oder des Zeitraumes t4 schnell detektiert werden können.

Fig. 4 a) bis f) zeigen die Ansteuerung beim Phasenanschnittsverfahren, wobei aus Fig. 4 in der Darstellung a) erkennbar ist, daß bei nicht durchgeschalteten Dimmern 1 und 40 dieselben Verhältnisse vorliegen wie beim Phasenabschnittsverfahren gemäß Fig. 3 a) bis f). Dementsprechend gelten auch die obigen Ausführungen zur Fig. 3 a).

Auch beim Phasenanschnittsverfahren wird diesem sinusförmigen Spannungsverlauf der beiden Halbwellen 75 und 76 die Spannungsversorgung für die beiden Netzteile 24 und 64 der beiden Dimmer 1 und 40 aus Fig. 2 entnommen. Dabei wird über einen kurzen Zeitraum t1 und t2 ebenfalls ein Teil der Halbwellen 75 und 76 zum Netzteil 24 und 64 durchgeschaltet, so daß die Energieversorgung für die beiden Dimmer 1 und 40 sichergestellt ist und das bereits zu Fig. 3 ausgeführte ebenfalls für das Phasenanschnittsverfahren gilt.

Unter Fig. 4 b) ist der Spannungsverlauf an beiden Dimmern 1 und 40 in durchgezogenen Linien dargestellt, wenn nach dem Phasenanschnittsprinzip dem Verbraucher 2 zeitlich begrenzt Energie zugeführt wird, d.h. die Netzspannung der Halbwellen 75 und 76 über die Zeiträume t5 und t6 vom Masterdimmer 1 durchgeschaltet wird.

Dabei zeigt die Darstellung Fig. 4 c) den an dem Verbraucher 2 anliegenden Spannungsverlauf in durchgezogenen Linien, welcher aufgrund der Spannungsansteuerung gemäß der Darstellung von Fig. 4 b) vom Masterdimmer 1 durchgeschaltet wird. Es ist erkennbar, daß während der Zeiträume t1 und t2 die beiden Halbwellen 75 und 76 nicht durchgeschaltet werden, da diese kurzen Bereiche zur Spannungsversorgung, wie bereits oben erläutert, für das Netzteil 24 bzw. 64 benötigt werden.

Nach Ablauf des Zeitraumes t1 wird über eine beispielhaft dargestellte Zeitspanne t3 die Spannung zu dem Verbraucher 2 ebenfalls nicht durchgeschaltet. Erst zu Beginn des Zeitraumes t5 liegt, wie aus der Darstellung c) ersichtlich ist, der entsprechend durchgeschaltete Spannungsanteil 78 über diesen

Zeitraum t5 an dem Verbraucher 2 an. Desgleichen gilt bezüglich der Zeitspanne t2 für die untere Halbwelle 76. Während der Zeitspanne t2 wird die Netzspannung ebenfalls nicht auf den Verbraucher 2 durchgeschaltet, so daß auch dieser Anteil der unteren Halbwelle 76 für die Versorgung der Netzteile 24 und 64 zur Verfügung steht.

Anschließend wird auch die untere Halbwelle 76 über den Zeitraum t4 nicht durchgeschaltet. Erst ab dem Zeitraum t6 erfolgt hier die Durchschaltung der Netzspannung 76 zu dem Verbraucher 2, so daß sich wie in der Darstellung c) erkennbar, ein Spannungsanteil 79 ergibt. Während der Zeiträume t3 und t4 wird folglich beim Phasenanschnittsverfahren die Spannung der oberen Halbwelle 75 und den unteren Halbwelle 76 nicht durchgeschaltet, so daß auch während dieser Zeiträume t3 und t4 an dem Verbraucher 2 keine Spannung anliegt. D.h. der Masterdimmer 1 schaltet die Netzspannung der Halbwellen 75 und 76 nur zeitweise entsprechend eines am Interface 13 anliegenden Ansteuersignal durch, so daß beispielsweise ein als Beleuchtung ausgebildeter Verbraucher ein gedämpftes Licht abgibt. Bei maximaler Ansteuerung des Verbrauchers 2 sind die Zeiträume t3 und t4 = 0.

In der Darstellung Fig. 4 d) sind die zugehörigen Controllereingangspegel 82, 83 und 84, 85 der beiden Halbwellendetektoren 6, 7 und 46, 47 des Masterdimmers 1 sowie des Slavedimmers 40 dargestellt, welche zwangsläufig identisch sind, da von diesen dieselbe vom Masterdimmer 1 durchgeschaltete Spannung detektiert wird. So erkennen die beiden Halbwellendetektoren 6 und 46 des Masterdimmers 1 und des Slavedimmers 40, daß zu Beginn der oberen Halbwellen 75 die Spannung, welche von den Netzteilen 24 und 64 benötigt wird, nicht durchgeschaltet ist. Dies ist durch den Anfangspegel 82 in der Darstellung d) über den Zeitraum t1 erkennbar. Desweiteren liegt während des Zeitraumes t3 an beiden Dimmern 1 und 40 eine Spannung an, da diese ebenfalls nicht durchgeschaltet ist. Insoweit gibt es hier ein Pegelsignal 83 und 85, wie dies in der Darstellung d) erkennbar ist. Während der Durchschaltphase während des Zeitraumes t5 fällt wiederum an beiden Dimmern 1 und 40 keine Spannung der oberen Halbwelle 75 ab, so daß auch hier wiederum kein entsprechender Steuerpegel generiert wird.

In gleicher Weise wird auch ein entsprechender Signalpegel durch den zweiten Halbwellendetektor 7 bzw. 47 der beiden Dimmer 1 und 40 generiert. So erkennen die Halbwellendetektoren 7 und 47, daß der Beginn der unteren Halbwelle 76 zur Versorgung des jeweiligen Netzteiles 24 und 64 nicht durchgeschaltet wird, so daß der Anfangspegel 84 generiert wird. Daran anschließend wird die Spannung 79 ebenfalls nicht durchgeschaltet, so daß an den beiden Dimmern 1 und 40 eine Spannung anliegt und dementsprechend auch ein Eingangspegel 85 generiert wird. Anschließend wird wiederum die untere Halbwelle 76 während des Zeitraumes t6 durchgeschaltet, so daß sich hier wiederum über den Zeitraum t6 kein Schaltpegel ergibt.

Aufgrund dieser festgestellten Controllereingangspegel 82, 83 sowie 84 und 85 erfolgt nun die Ansteuerung des Leistungsteils 63 des Slavedimmers 40. Hierzu ist in der Darstellung e) der Ansteuerpegel des Masterdimmers 1 mit 86 und 87 gekennzeichnet. Dabei stellt 86 den Ansteuerpegel für die obere Halbwelle 75 und 87 den Ansteuerpegel für die unter Halbwelle 76 dar. Die beiden Ansteuerpegel 86 und 87 erstrecken sich identisch über den Schalzeitraum t5 und t6 über deren gesamte Längen. Diese Ansteuerung des Leistungsteils 23 erfolgt aufgrund eines Steuersignals, welches dem Masterdimmer 1 über dessen Interface 13 zugeführt wird. Dementsprechend weisen dieser Ansteuerpegel 86 und 87 auch die gleiche zeitliche Länge t5 und t6 auf, welche identisch zu den beiden Durchschaltzeiträumen sind.

Demgegenüber wird vom Slavedimmer 40 innerhalb dieser Zeiträume t5 und t6 eine kürzere "Durchschaltphase" generiert. Dementsprechend sind auch beiden Ansteuerpegel 88 und 89 in der Darstellung f) kürzer dargestellt. Dabei wird beim Phasenanschnittsverfahren eine gewisse Zeitverzögerung Δt des Beginns dieser beiden Ansteuerpegel 88 und 89 generiert. Aus den beiden Zeiträumen t5 und t6 wird ein Ansteuerpegel 88 bzw. 89 berechnet, welcher definiert um jeweils den gleichen Differenzzeitraum Δt kürzer ist als die beiden Ansteuerpegel 86 und 87 des Masterdimmers 1. Diese Zeiträume Δt sind ebenfalls mit einer entsprechenden Programmierung der Steuereinrichtung auf einen definierten Wert festlegbar.

Dies bedeutet nun, daß die Halbwellendetektoren 46 und 47 stets erkennen können, wie die Leistung vom Masterdimmer 1 angesteuert wird. Denn dieser weist einen längeren Steuerpegel 86 und 87 auf, während dessen Zeitraum t5 und t6 an beiden Dimmern 1 und 40 keine Spannung anliegt. Dieser kürzere Zeitraum Δt wird deshalb genutzt, um bei der Detektion erkennen zu können, ob während dieses Zeitraumes tatsächlich an beiden Dimmern 1 und 40 keine Spannung anliegt. Ist das der Fall, so "weiß" die Steuereinrichtung des Slavedimmers 40, daß sie ihre eigene Ansteuerung korrekt an die Ansteuerung des Masterdimmers 1 angepaßt hat. Verlängert sich dieser Zeitraum Δt aufgrund einer Änderung der Ansteuerung durch den Masterdimmer 1, so wird diese Information über den Phasendetektoren 45 der Steuereinrichtung 52 übergeben und der Ansteuerpegel 88 und 89 entsprechend nachgeführt. Verringert sich der Zeitraum Δt aufgrund der detektierten Schaltspannungen des Masterdimmers 1, so führt der Slavedimmer 40 ebenfalls den Ansteuerzeitraum oder sogenannten Phasenwinkel seiner Ansteuerpegel 88 und 89 nach, bis wieder die vorgegebene Zeitdifferenz Δt erreicht ist.

Um schnelle Dimmvorgänge des Masterdimmers 1 schneller berücksichtigen zu können, ist hier auch vorgesehen, daß der Slavedimmer 40 in zyklisch oder unzyklischen Zeitabständen seine Ansteuerpegel 88 oder 89 entweder der oberen Halbwelle oder der unteren Halbwelle für den Zeitraum einer der Halbwellen 75 oder 76 nicht oder überdurchschnittlich verkürzt durchschaltet, so daß auch größere Zeitdifferenzen bei starker Verkürzung entweder des Zeitraumes t3 oder des Zeitraumes t4 schnell detektiert werden können.

## Patentansprüche

1. Dimmermodul bestehend aus einer programmierbaren, einen Mikroprozessor aufweisenden Steuereinrichtung, durch welche ein Leistungsteil zur Steuerung von elektrischen Verbrauchern nach dem Phasenan-/abschnitt-Prinzip ansteuerbar ist, wobei das Dimmermodul mit seinem Leistungsteil ausgangsseitig mit den Ausgängen des Leistungsteils eines nach dem Phasenan-/abschnitt-Prinzip arbeitenden Masterdimmers parallel schaltbar ist,
**dadurch gekennzeichnet,**
**daß** das Dimmermodul (1, 40) einen Phasendetektor (5, 45) aufweist, durch welchen der zeitliche Verlauf (78, 79) der Master-Halbwellen (78, 79) der zum Verbraucher (2) durchgeschalteten Masterphase des Masterdimmers ermittelbar und an die Steuereinrichtung (12, 52) übergebbar ist und,
**daß** das Leistungsteil (23, 63) des Dimmermoduls (1, 40) durch entsprechende Ansteuerung der Steuereinrichtung (12, 52) auf Basis des ermittelten Phasenverlaufs der Master-Halbwellen (78, 79) zeitlich definiert verkürzte Dimmer-Halbwellen der Dimmerphase generiert, welche parallel zur Masterphase zum Verbraucher (2) durchgeschaltet werden.

2. Dimmermodul nach Anspruch 1, **dadurch gekennzeichnet, daß** als Zeitbasis zur Detektion des zeitlichen Verlaufs der Masterphase (78, 79) und zur Steuerung des zeitlichen Verlaufs der Dimmer-Halbwellen ein elektronischer Taktgeber vorgesehen ist.

3. Dimmermodul nach Anspruch 1 oder 2, **dadurch gekennzeichnet, daß** der Phasendetektor (5, 45) aus zwei Halbwellendetektoren (6, 7, 46, 47) besteht, durch welche jede Halbwelle (78 und 79) der Masterphase separat detektierbar und von der Steuereinrichtung (12, 52) auswertbar ist.

4. Dimmermodul nach einem der Ansprüche 1 bis 3, **dadurch gekennzeichnet, daß** die Steuereinrichtung (12, 52) jede Dimmer-Halbwelle der Dimmerphase separat ansteuert.

5. Dimmermodul nach einem der Ansprüche 1 bis 4, **dadurch gekennzeichnet, daß** die Steuereinrichtung (12, 52) in zyklischen oder unzyklischen Zeitabständen einzelne oder mehrere aufeinander folgende Dimmer-Halbwellen nicht oder überdurchschnittlich verkürzt durchschaltet.

6. Dimmermodul nach einem der Ansprüche 1 bis 5, **dadurch gekennzeichnet, daß** die Steuereinrichtung (12, 52) einen Teil des Beginns jeder Halbwelle (75, 76) der am Verbraucher (2) und am zum Verbraucher (2) in Reihe geschalteten Dimmermodul anliegenden Netzspannung (L, N, 75, 76) nicht als Dimmspannung durchschaltet und dieser Teil zur Energieversorgung des Dimmermoduls (1, 40) herangezogen wird.

7. Dimmermodul nach einem der Ansprüche 1 bis 6, **dadurch gekennzeichnet, daß** ein zusätzliches Interface (13) vorgesehen ist, über welches der Steuereinrichtung (12) Steuersignale zur Ansteuerung des Leistungsteils (23) zuführbar sind, so daß das Dimmermodul wahlweise als Masterdimmer (1) einsetzbar ist.

8. Dimmermodul nach einem der Ansprüche 1 bis 7, **dadurch gekennzeichnet, daß** eine Temperaturmeßeinrichtung (32, 72) vorgesehen ist, welche an die Steuereinrichtung (12, 52) bei Erreichen einer vorgebbaren Höchsttemperatur des Dimmermoduls (1, 40) ein Temperatursignal abgibt und, daß die Steuereinrichtung (12, 52) bei anliegendem Temperatursignal die durchgeschaltete Leistung des Dimmermoduls (1, 40) reduziert.

9. Dimmermodul nach Anspruch 8, **dadurch gekennzeichnet, daß** bei anliegendem Temperatursignal zur Leistungsreduzierung nur eine der beiden Halbwellen (75, 76) durchgeschaltet wird.

10. Dimmermodul nach Anspruch 7 oder 8, **dadurch gekennzeichnet, daß** das als Masterdimmer (1) eingesetzte Dimmermodul zeitweilig nur eine der beiden Master-Halbwellen (75, 76) durchschaltet und durch den Phasendetektor (5) der Schaltzustand eines parallel geschalteten, weiteren Dimmermoduls ermittelbar ist.

## Claims

1. Dimmer module consisting of a programmable control device with a microprocessor, by means of which an output part for controlling electrical consumer units can be controlled according to the phase-angle principle, wherein the dimmer module with its output part can be connected on the output side to the outputs of the output part of a master dimmer operating according to the phase-angle principle,
**characterised in that**
the dimmer module (1, 40) comprises a phase detector (5, 45) by means of which the time characteristic (78, 79) of the master half waves (78, 79) of the master phase connected to the consumer unit (2) can be determined and transmitted to the control device (12, 52) and
**in that** the output part (23, 63) of the dimmer module (1, 40), by means of corresponding control of the control device (12 , 52) based on the established phase characteristic of the master half waves (78, 79), generates time-defined abbreviated dimmer half waves of the dimmer phase, which are connected to the consumer unit (2) parallel to the master phase.

2. Dimmer module according to claim 1, **characterised in that** an electronic clock-pulse generator is provided as a time basis for detecting the time characteristic of the master phase (78, 79) and for controlling the time characteristic of the dimmer half-waves.

3. Dimmer module according to claim 1 or 2, **characterised in that** the phase detector (5, 45) consists of two half-wave detectors (6, 7, 46, 47), by means of which each half wave (78 and 79) of the master phase can be detected separately and evaluated by the control device (12, 52).

4. Dimmer module according to one of claims 1 to 3, **characterised in that** the control device (12, 52) controls each dimmer half wave of the dimmer phase separately.

5. Dimmer module according to one of claims 1 to 4, **characterised in that** at cyclical or non-cyclical time intervals the control device (12, 52) does not connect through individual or several consecutive dimmer half waves or only connects them through in a manner that is abbreviated more than average.

6. **Dimmer module according to one of claims 1 to 5, characterised in that the control** device (12, 52) does not connect through as dimming voltage a part of the beginning of each half wave (75, 76) of the mains voltage (L, N, 75, 76) available to the consumer unit (2) and to the dimmer module connected in series with the consumer unit (2) and this part is used for supplying power to the dimmer module (1, 40).

7. Dimmer module according to one of claims 1 to 6, **characterised in that** an additional interface (13) is provided, by means of which control signals can be supplied to the control device (12) for controlling the output part (23), so that the dimmer module can be used optionally as a master dimmer (1).

8. Dimmer module according to one of claims 1 to 7, **characterised in that** a temperature measuring device (32, 72) is provided which sends a temperature signal to the control device (12, 52) when a predefinable highest temperature of the dimmer module (1, 40) is reached, and **in that** the control device (12, 52) at the given temperature signal reduces the connected output of the dimmer module (1, 40).

9. Dimmer module according to claim 8, **characterised in that** at the given temperature signal for reducing output only one of the two half waves (75, 76) is connected through.

10. Dimmer module according to claim 7 or 8, **characterised in that** the dimmer module used as the master dimmer (1) temporarily connects through only one of the two master half waves (75, 76), and by means of the phase detector (5) the switching position of a parallel connected, additional dimmer module can be established.

## Revendications

1. Module gradateur composé d'un dispositif de commande programmable comportant un microprocesseur, au moyen duquel un étage de puissance servant à la commande de consommateurs électriques peut être commandé selon le principe de la coupure de phase ascendante/descendante, le module gradateur avec son étage de puissance pouvant être branché en parallèle côté sortie avec les sorties de l'étage de puissance d'un gradateur maître fonctionnant selon le principe de la coupure de phase ascendante/descendante,
**caractérisé en ce**
**que** le module gradateur (1, 40) présente un détecteur de phase (5, 45) au moyen duquel la variation temporelle (78, 79) des demi-ondes maîtresses (78, 79) de la phase maîtresse du gradateur maître connectée au consommateur (2) peut être déterminée et transmise au dispositif de commande (12, 52) et
**que** l'étage de puissance (23, 63) du module gradateur (1, 40) génère par commande correspondante du dispositif de commande (12, 52), sur la base de la variation de phase déterminée des demi-ondes maîtresses (78, 79), des demi-ondes de gradateur de la phase de gradateur raccourcies de manière définie dans le temps qui sont connectées au consommateur (2) en parallèle avec la phase maîtresse.

2. Module gradateur selon la revendication 1, **caractérisé en ce qu'**il est prévu une horloge électronique comme base de temps pour la détection de la variation temporelle de la phase maîtresse (78, 79) et pour la commande de la variation temporelle des demi-ondes de gradateur.

3. Module gradateur selon la revendication 1 ou 2, **caractérisé en ce que** le détecteur de phase (5, 45) est composé de deux détecteurs de demi-onde (6, 7, 46, 47) au moyen duquel chaque demi-onde (78 et 79) de la phase maîtresse peut être détectée séparément et évaluée par le dispositif de commande (12, 52).

4. Module gradateur selon l'une des revendications 1 à 3, **caractérisé en ce que** le dispositif de commande (12, 52) commande séparément chaque demi-onde de gradateur de la phase de gradateur.

5. Module gradateur selon l'une des revendications 1 à 4, **caractérisé en ce qu'**à intervalles de temps cycliques ou non cycliques, le dispositif de commande (12, 52) ne connecte pas ou connecte de manière exceptionnellement raccourcie des demi-ondes de gradateur individuelles ou plusieurs demi-ondes de gradateur successives.

6. Module gradateur selon l'une des revendications 1 à 5, **caractérisé en ce que** le dispositif de commande (12, 52) ne connecte pas en tant que tension de gradation une partie du début de chaque demi-onde (75, 76) de la tension de secteur (L, N, 75, 76) appliquée au consommateur (2) et au module gradateur branché en série avec le consommateur (2) et que cette partie est utilisée pour l'alimentation en énergie du module gradateur (1, 40).

7. Module gradateur selon l'une des revendications 1 à 6, **caractérisé en ce qu'**il est prévu une interface supplémentaire (13) via laquelle des signaux de commande pour la commande de l'étage de puissance (23) peuvent être amenés au dispositif de commande (12) afin que le module gradateur puisse être utilisé au choix comme gradateur maître (1).

8. Module gradateur selon l'une des revendications 1 à 7, **caractérisé en ce qu'**il est prévu un dispositif de mesure de température (32, 72) qui délivre au dispositif de commande (12, 52) un signal de température quand une température maximale prescriptible du module gradateur (1, 40) est atteinte et
que le dispositif de commande (12, 52) réduit la puissance connectée du module gradateur (1, 40) quand le signal de température est présent.

9. Module gradateur selon la revendication 8, **caractérisé en ce que**, pour réduire la puissance, une seule des deux demi-ondes (75, 76) est connectée quand le signal de température est présent.

10. Module gradateur selon la revendication 7 ou 8, **caractérisé en ce que** le module gradateur utilisé comme gradateur maître (1) connecte temporairement une seule des deux demi-ondes maîtresses (75, 76) et que l'état de commutation d'un autre module gradateur branché en parallèle peut être déterminé par le détecteur de phase (5).
